# EUROPEAN PATENT SPECIFICATION

(11) **EP 1 224 635 B1**
(45) Date of publication and mention of the grant of the patent: **16.06.2004**
(21) Application number: 00914476.7
(22) Date of filing: 07.03.2000
(51) Int. Cl.: G07F 7/02, G07F 7/00

(54) **METHOD AND SYSTEM FOR CONTROLLING THE USE OF ANCILLARY SERVICE FACILITIES**
VERFAHREN UND SYSTEM ZUR GEBRAUCHSKONTROLLE VON ZUSATZDIENSTGERÄTEN
PROCEDE ET SYSTEME DE CONTROLE/GESTION DE L'UTILISATION D'INSTALLATIONS DE SERVICES AUXILIAIRES

(30) Priority: 28.10.1999 US 429451
(43) Date of publication of application: 24.07.2002
(73) Proprietor: Catalina Marketing International, Inc., St. Petersburg, FL 33716 (US)
(72) Inventor: KLINGLE, David, B., Dublin, California, CA 94568 (US)
(74) Representative: Molyneaux, Martyn William
(86) International application number: PCT/US2000/002534
(87) International publication number: WO 2001/031592

(56) References cited:
- EP-A- 0 829 813
- EP-A- 0 950 968
- WO-A-94/27258
- WO-A-98/37518
- WO-A-99/16702
- JP-A- 7 311 880
- US-A- 5 842 188

## Description

### Background of the Invention

### Field of the invention

The present invention relates to ancillary service facilities and in particular, to automating the use of such facilities.

### Discussion of the background

Ancillary service facilities, which include automobile washing facilities, compressed air facilities and automobile vacuum cleaning facilities, are being installed in a variety of businesses in addition to their traditional presence in motor vehicle fueling stations. Motor vehicle fueling stations have provided these services to their customers. Some fueling stations charge their customers for use of these facilities and discount the charge for this use if the customer makes additional purchases at the fueling station. The convenience of use of ancillary motor vehicle service facilities, and their relatively low installation and maintenance costs, make them an attractive addition to many businesses.

Efforts to minimize the expense of operating automated automobile washing facilities have lead to a variety of innovations which facilitate their use by customers. Patent 4,527,578 to Klein, et al. teaches using a code activated car wash wherein a customer is given a numerical code number to enter into a keypad at the entrance of the car wash. This system has the drawback that the user must manually type in the code number onto a keypad located near the entrance of the car wash while the customer is seated in his or her automobile. In addition, the document which contains the code number may be confusing, difficult to read, or the customer may lose the document.

U. S. Patent No. 5,650,761 to Gomm, et al. teaches using a smart card as an alternative to money in conjunction with automatically delivered goods or services, such as an automatic car wash. This reference teaches storing a credit representing a cash balance and transferring the cash value from the smart card to a retailer's account.

WO 99/16702 discloses a system in which a customer purchases a prepayment means by which credits for future purchases associated with a retail facility are established. The customer is able, at one point of sale (POS) facility, to order for example, a car wash at either a fuel dispenser 18, a transaction register 30 of a convenience store 20, a quick stop restaurant (QSR) transaction terminal, or at a car wash interface 48. This reference discloses that a retailer can provide loyalty benefits to a customer such as cash rebates and discounts to encourage customers to make subsequent purchases at the retailer.

### Summary of the Invention

It is an object of the present invention to provide control of ancillary service facilities.

It is another object of this invention to improve the techniques available to provide ancillary services as a promotional benefit.

It is another object of this invention to enable retailers to provide ancillary services to a person, depending upon demographics, transaction history, and other personal factors.

According to a first aspect of this invention there is provided a method as claimed in claim 1 herein.

According to a second aspect of this invention there is provided a system as claimed in claim 39 herein.

The present invention achieves these an further objectives by associating a credit for ancillary services with a token. Tokens used by the present invention are either a certificate given to a customer or a card containing a customer's identification. The token contains machine readable data which corresponds to data in a database indicating a credit and conditions precedent to obtaining the credit. The machine readable data may be a code identifying the credit and conditions. The machine readable data may be an identification code identifying the customer, such as a social security number. If the machine readable data is an identification code identifying the customer, then the aforementioned database stores the terms and conditions of a credit in association with that identification code. Since the customer may be uniquely identified by biometric data, such as finger prints or iris patterns, the customer's unique attributes may be used as a token by the present invention. Credits for the use of ancillary services are determined by machine reading the data contained in or on a token by methods including reading printed objects with bar codes, reading objects with magnetically encoded information, observations made by reading radio frequency devices or customer biometrics. The retailer associates a credit to use an ancillary service with a token and the ancillary service system reads the data on the token presented by the customer. The ancillary service facility system's control system determines whether to provide the ancillary service and accounting for the ancillary service depending upon the data read by the token.

### Brief Description of the Drawings

Figure 1 is an overhead view of a retailer's facility which includes facilities to provide ancillary services;
Figure 2 is a front view of a printed certificate which comprises an optically readable bar code and which is also associated with a credit to use a car washing facility;
Figure 3 is an front view of a retailer's frequent shopper's card which comprises an optically readable bar code;
Figure 4 is an front view of a retailer's frequent shopper's card which comprises a magnetic stripe which contains magnetically encoded information;
Figure 5 is a schematic diagram of the interconnection between the elements of the preferred embodiment of the present invention; and
Figure 6 is a front view of an ancillary service facility user interface.

### Description of the Preferred Embodiments

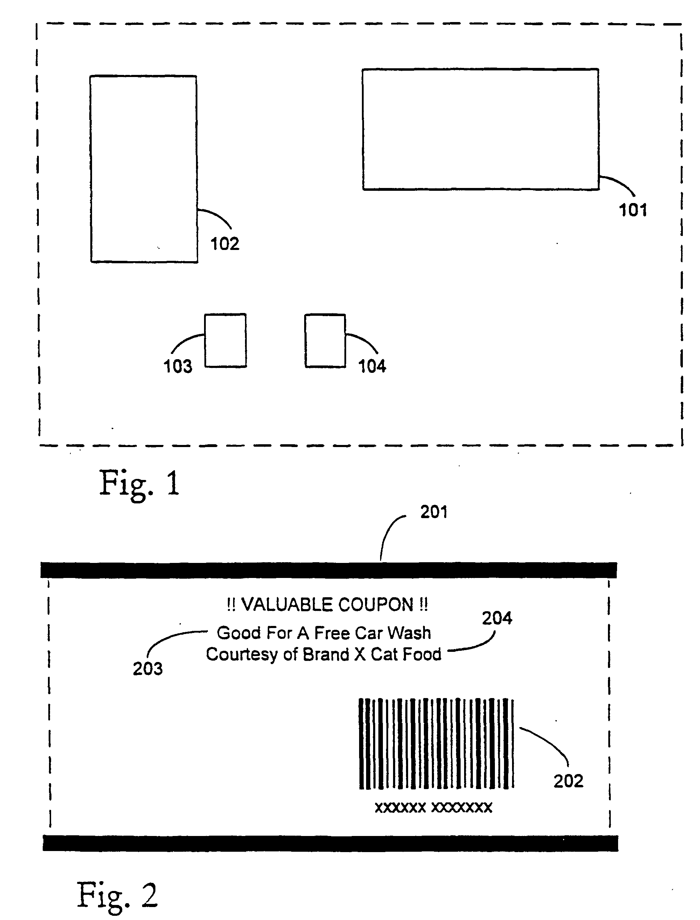

The description of the preferred embodiments will be made in conjunction with reference to the figures, wherein like numbered elements serve the same or similar functions. Figure 1 illustrates a retailer which has a main building containing the retail store 101 which sells goods and/or non-ancillary services and which has nearby facilities to provide ancillary services. Figure 1 shows the retail store 101 has the following ancillary facilities located in proximity to the store: a car wash 102, a compressed air dispenser 103 to allow customers to inflate tires or other objects requiring compressed air, and an automobile vacuum cleaner 104. The ancillary service facilities shown in figure 1 require a customer to provide payment for the facility or to identify that he or she has a credit to use the facility. The example retailer illustrated in figure 1 has the ancillary service facilities located near the retail store 101. A retailer could provide ancillary services at facilities which are located remotely from the retail store 101 or even through facilities near the retail store, but not operated by or owned by the retailer.

The present invention allows a retailer to selectively provide credits to customers for ancillary services. The existence of the credit is stored in a database along with data identifying the credit. The retailer either gives the customer a certificate containing machine readable data identifying the credit or stores the customer's identification in association with data identifying the credit. The system of the present invention uses an automated mechanism which reads the data identifying either the credit from the certificate or the customer's identification, determines if there exists a corresponding credit, provides the requested ancillary service, and accounts for the credit. Examples of certificates and customer identifications used by the present invention are shown in figures 2 through 4 and are further described below.

Embodiments of the present invention may provide to the customer a certificate which represents the credit to use the ancillary service facility. Certificates issued to customers require an identification code, which is usually a unique number, to be encoded onto the certificate to allow identification of the certificate that is the token and determination of any credits that have been associated with that particular token. Each certificate will have an identification code encoded upon the certificate and this code may be either self authenticating or stored into a service credit database 501 and recalled for verification at the time of use, as is described below. A system and method for generating a self authenticating code number, which is a code number that appears to be random but is encoded so as to allow self-validation, that could be used as an identification number for certificates used by the present invention is disclosed in U. S. Patent No. 5,892,827 to Beach. U. S. Patent No. 5,892,827 and all references therein are hereby incorporated by reference.

Figure 2 illustrates a printed certificate which is given to a customer who is entitled to use an ancillary service facility. Figure 2 shows a certificate 201 which may be printed through the use of a receipt printer or special printer used to print such certificates. The certificate 201 may be printed at a Point Of Sale (POS) station, at an automated kiosk located within or away from a retail store, or by a terminal connected to the Internet or other electronic communication facility. The certificate 201 may also be provided in conjunction with a retail sales purchase either in response to a customer paying for the ancillary service or as part of a promotion sponsored by the retailer or other entity. The certificate 201 may contain a printed notice description 203 of the ancillary service to which the customer is entitled, a free car wash in the illustration. There may be an optional sponsor notice 204 of the entity which sponsors the customer's use of the ancillary service, brand "X Cat Food" in the illustration. A functional component of the certificate 201 is the printed bar code 202, which is encoded to contain the certificate's identification number and which will be scanned by equipment contained in the ancillary service facility to authorize the use of the facility.

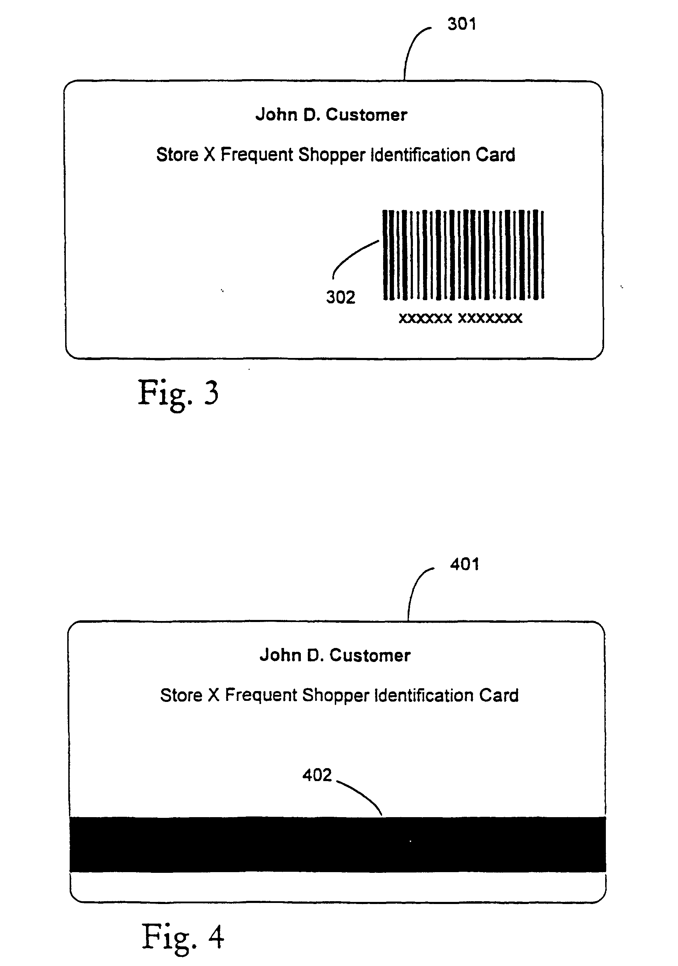

Figure 3 illustrates a frequent shopper card 301 which may be used to identify the customer and may be used in conjunction with other promotions offered by a retailer. The frequent shopper card 301 may have the customer's name 301 printed upon the face of the card, although this is not a necessary element of this device. The frequent shopper card 301 contains a printed bar code 302 which contains an encoded number that uniquely identifies the card and correspondingly the customer whom holds the card. The present invention allows the retailer to associate a credit for the use of an ancillary service in association with the number encoded within the barcode 302 printed on the frequent shopper card 301. The customer presents his or her frequent shopper card 301 just prior to using the ancillary service and the ancillary service facility will determine if a credit for the use of the facility has been stored and allow the customer use of the service if a credit has been stored. Similar identification cards which contain an identifying bar code, such as a driver's license with a bar code, may also be used by the present invention.

The preferred embodiment of the present invention uses both the certificate 201 and frequent shopper card 301 as tokens presented to determine credits for the use of ancillary services. These devices are preferred because they are inexpensive to produce and equipment to read them are readily available and often already installed in retail stores. The use of a printed bar code also allows visual inspection of the encoded information to allow observation of gross misprinting of the certificate as well as indications of alteration.

Figure 4 illustrates an alternative device which may be used as a certificate or customer identification by alternative embodiments of the present invention. Figure 4 illustrates a card 401 which comprises a magnetic stripe 402 that contains encoded information which serves to identify the customer. The card 401 may be a certificate that is given to the customer and used in a manner similar to the certificate illustrated in figure 2. Identification data is encoded in the magnetic stripe 402 of the card 401. The card 401 may similarly be an alternative embodiment of a frequent shopper card, as defined in figure 3.

Alternative embodiments of the present invention may use a card 401 that is also a payment card, such as a credit card or debit card, used by the customer to pay for purchases. These embodiments of the present invention use the information magnetically encoded onto the magnetic stripe 402 on these payment cards only to identify the card, and thereby the customer, and do not charge the account associated with the card for the service.

A device similar to card 401 is a "SmartCard." A SmartCard is a card which can be easily carried and which has multiple bytes of electronically readable memory. A SmartCard interfaces with a reader which will read the contents of the memory. The present invention may use a SmartCard by storing data in the SmartCard's memory that is equivalent to the code encoded into the bar code of certificate 201 or card 301/401. The SmartCard memory could also be programmed with a self authenticating code, as described above, or other information indicating the credit to use the ancillary service facility.

In addition to the tokens illustrated in figures 2 through 4, it is obvious that the present invention may use the determination of any customer identification to identify the customer and support determination of credits that customers may have for ancillary services. Other customer identification processes which may be used include automated reading of a personal check to determine the customer's checking account number, determining a cellular telephone identification number by using an radio frequency query of a cellular phone used by the customer, querying Radio frequency "tag" identification devices held by the customer or measurement of the customer's biometrics including fingerprints, voice prints and other measurements known to practitioners in the relevant arts. Devices which are able to read these data and parameters are likewise known to practitioners of the relevant arts.

A customer's identification may be further determined by data the user enters at the ancillary service facility. The data entered may be an identification number or an identifier used in conjunction with an Internet service, as is described below.

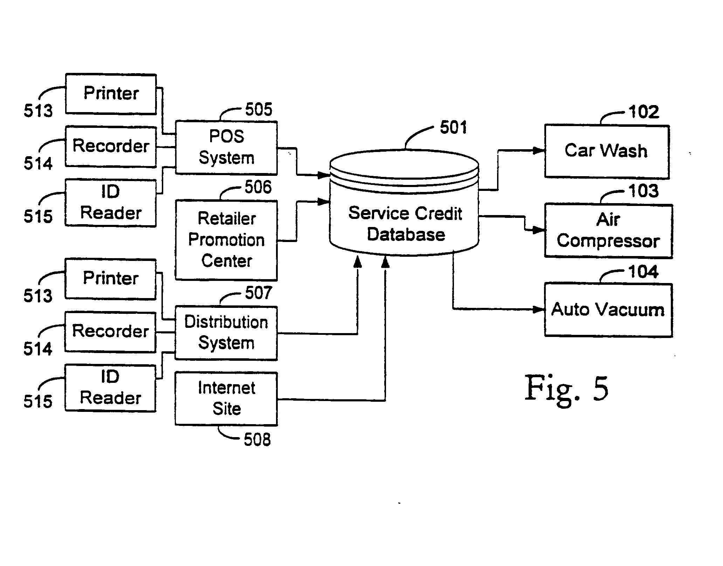

Figure 5 illustrates a schematic diagram of the data processing elements of the preferred embodiment of the present invention. The service credit database 501 stores the ancillary service credits associated with either certificates or customer identification. The retailer provides credits to the benefit of a customer through a variety of crediting systems which store the credit in association with a token in the service credit database 501. Figure 5 illustrates examples of crediting systems including Point Of Sale (POS) systems 505, distribution systems 507, retailer promotional systems 506 and Internet site 508.

The ancillary service facilities have a device which reads a certificate or customer identification presented at the ancillary service facility. The preferred embodiment of the present invention uses a bar code scanner which optically scans bar codes printed upon either a certificate 201 or a frequent shopper card 301, as described below. The ancillary service facilities have a controller, which in the preferred embodiment is an embedded computer programmed to control the operation of the facility and limit use of the facility, compares the presented token with data stored in the service credit database 501 to determine if the presented token is associated with a credit to use that service. The controller will then permit the use of the facility if the presented token has been associated with a credit. The preferred embodiment will store the identification number encoded within the bar code 202 or 302 in the service credit database 501 to indicate tokens with a credit. When a certificate 201 or frequent shopper card 301 is presented and the presenter uses the ancillary service facility, the credit is removed from the service credit database.

The example ancillary services illustrated in figure 5 include a car wash 102, a compressed air dispenser, 103 and an automobile vacuum cleaner 104. The POS station 505 and distribution station 507 may also have a printer 513 to print certificates or other notices to the customer or user of the equipment, a recorder 514 to record information onto magnetic stripes contained on cards if that is utilized by the particular embodiment and an optional ID reader 515 which will read the customer identification if the particular embodiment uses customer identification as a tokens.

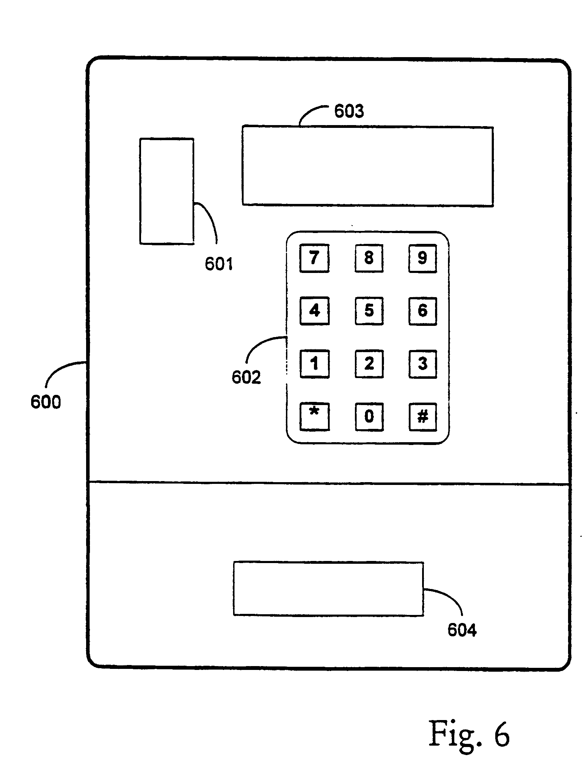

Figure 6 illustrates a facility user interface 600 for the ancillary service facilities. The facility user interface 600 allows the customer to select options and control the operation of the facility as needed. The facility user interface 600 either accepts payment for use of the service or accepts a certificate or customer identification and determines if a credit has been associated with the presented certificate or customer identification. The facility user interface 600 comprises a display 603 to provide instructions or messages to the customer who is using the facility. Such displays may include instructions on the use of the facility user interface, identification of the cost of services available through the associated facility, and other information associated with the use of the facility user interface.

The facility user interface 600 further comprises a money acceptor 601 to allow the customer to pay for services. The money acceptor 601 may accept coins or currency to allow for payment for services to be provided. The money acceptor 601 will also return change to correct overpayment by the customer. A keypad 602 allows the customer to select options during the course of using the facility user interface.

The facility user interface 604 further comprises a certificate/ID reader 604 which will read the certificates or customer identification used by the particular embodiment. The certificate/ID reader of the preferred embodiment comprises a bar code scanner to read certificates or customer identification cards with printed bar codes. Embodiments of the present invention which use a certificate or customer identification that comprises a magnetic stripe will use an appropriate reader to read the information on the magnetic stripe. The certificate/ID reader 604 in embodiments which use a customer check number, cellular phone identification, radio frequency "tag" identification or measurement of customer's biometrics will use devices known to practitioners in the relevant arts to read these items and produce an electronically readable output for use as a token.

The operation of the present invention begins when the retailer associates a credit for an ancillary service with a token. A retailer may associate a credit with at token in response to a customer's payment for the ancillary service.

A retailer may also associate a credit with a token as part of a promotional program. Examples of such promotional programs include providing a credit to use an ancillary service in response to the purchase of a specified product. The promotional program may be a computer implemented promotional program depending a credit based upon a customer's prior purchase history or the relative frequency of the customer's purchase of certain products. The promotional program may provide a limited or unlimited number of credits to selected or all members of the retailer's frequent shopper program. The credit may be for one free use of an ancillary service, or a reduced cost use of the ancillary service.

Figure 5 illustrates several facilities which will "give" a customer credit to use an ancillary service, i.e. facilities which cause a credit to be associated with a token either already possessed or to be given to the customer. The facilities used to give credit may be placed within retail stores such as supermarkets, fuel stations, department stores, and convenience stores. Credit for ancillary services may also be given in conjunction with a customer's interaction with an Internet site, such as a world wide web site.

One facility to give credit for an ancillary service is a Point Of Sale (POS) station 605. POS station 605 may be located at a checkout stand of a retailer or may be present at other sales locations. The POS station 505 may accept payment for the ancillary service, or the ancillary service may be given at a reduced price or cost free in response to the purchase of a specified item. The POS station 505 will either generate a certificate to give to the customer or read a customer's identification depending upon the particular embodiment. If a certificate is to be generated, a certificate identification code, to be encoded upon the certificate, may be selected by the POS station. If a printed certificate 201 is to be issued, the POS station may have a printer 513 to generate the certificate. If a certificate with a magnetic stripe is to be issued, a recorder 514 may be used to record the code onto the certificate. If a customer's identification is used as a token, the POS station 505 will contain a customer identification reader 515. The customer identification reader 515 will be able to read or allow entry of the form of customer identification used by the particular embodiment, as described above.

A specialized form of POS station includes a fuel pump located at a fuel sales facility that is used to dispense and sell fuel. A fuel pump which includes a suitable printer may be used to print a certificate 201 in response to a qualifying purchase of fuel. A fuel pump which further comprises an ID reader 515 may read the identification of the customer purchasing fuel and provide a credit for the use of an ancillary service facility to that customer based upon a qualifying purchase. Ancillary facility usage credits which are determined by the fuel pump located at a fuel sales facility will communicate data associated with the token representing the credit to the service credit database 501. A POS system which is either located in a retail store or part of a fuel pump may also comprise a keyboard or other mechanism to allow the customer to enter his or her identification data.

In addition to a POS station 505, a retailer may either distribute certificates or associate credit with a token based upon customer identification at a distribution station 506. Distribution station 506 operates in a manner similar to POS station 505, but does not handle the general checkout processing of the POS station 505. Embodiments of a distribution station 506 may simply include a device for accepting change or currency and that will issue a certificate 201 in response to a customer depositing currency of sufficient value to use the ancillary service. Distribution station 506 may also be embodied in an automated kiosk which is located at locations that are convenient for the customer to use. Distribution station 506 may provide certificates or give credits to customers for no cost or at a discount to encourage people to use the distribution station. These embodiments of a distribution station 506 may further read customer identification, as describe above, to determine the token with which to associate the credit for ancillary service.

Credit for the use of an ancillary service may also be given to customers or the public at large through a retailer promotion system 507. A retailer promotion system 507 provides credits to people who are not necessarily customers of the retailer providing the ancillary service and it may provide credits to people that have no interaction with the retailer in order to entice people to become customers. A retailer may define classes of people to receive credit to use ancillary services and the retailer promotion system 507 will determine the members of these classes and either give these class members credits to use ancillary services based upon their identification card or the retailer promotion system 507 may cause certificates to be distributed to these class members who may then use the certificates to receive the service. Classes of people to receive a credit for use of an ancillary device include people who live in a certain geographic area, people who are members of a frequent shopper club, customers of a retailer who have purchased a minimum value of products over a specified time period and other categories of people that a retailer would desire to entice to use the retailer's facilities. A class of people to be given credit to use an ancillary service may also be chosen based upon a machine readable identification accepted by the retailer, such as a frequent shopper card, payment card or checking account number. A class given a credit in association with a frequent shopper card or payment account and which is selected upon minimum purchase patterns that are also tracked through the use of the same frequent shopper card or payment account is a case where the class is chosen based upon the use of an identification device. Providing credit to all members of a retailer's frequent shopper club is another example of selecting a class of people based upon a machine readable identification. A retailer promotion system 507 may use the credit card number or frequent shopper club membership number as a token and associate a credit for an ancillary service with these tokens. A retailer promotion center may also distribute certificates to non-customers selected by geographic area of the person's residence or other factors. The certificates may be distributed by mail or communicated electronically through e-mail or equivalent media.

A retailer may also use an Internet site to associate credits with tokens. A retailer may have a world wide web site which allows customers to enter their frequent shopper club number, or indication of other machine readable identification (e.g. a credit card number that is encoded in a magnetic stripe on a credit card), as a token identifier and the Internet site 508 will associate that token with a credit for the use of an ancillary service. An Internet site 508 may also generate an image of a printed certificate 201 and cause the terminal connected to the Internet site to print the certificate, which may then be presented at an ancillary service facility as a token. A certificate may be printed at a terminal connected to a world wide web site by displaying a picture of the printed certificate 201 and instructing the terminal's user to use the print function of the world wide web browser to print the display. A world wide web site could also prompt a user to enter identification information associated with that user, such as a frequent shopper card, payment card or checking account number, and a credit could be associated with a token that corresponds to the provided identification information. In addition to providing information to print a certificate or associating a credit with a user's identification during the visit to an Internet site, the Internet site could also operate an automatic mailing or automatic electronic mailing facility which would automatically distribute periodic messages concerning credits given to prior users of the Internet site.

A retailer may utilize Internet based identifications to identify the customer at the ancillary service facility or at a retailer facility. Examples of Internet based identification which may be used by the present invention include allowing the customer to enter his or her e-mail address through a keyboard located at the ancillary service facility. A retailer may also utilize an Internet World Wide Web (WWW) site that incorporates personal web site pages for each customer. These personal WWW site pages are pages maintained for individual customers and each personal WWW site page has a Universal Resource Locator (URL) chosen to correspond to either the associated customer's name or other customer identification. These personal WWW site pages may be used to offer purchasing incentives to the customer as well as offer credits to use ancillary service facilities. The URL or other identification technique used to identify the personal WWW site page for an individual customer may also be used to identify the customer at the retailer facility or ancillary service facility. Identification through a personal WWW site page or e-mail account may be achieved by entering identification data through the use of a keyboard or by using a WWW browser or other Internet interface that is incorporated into the retail facility or ancillary service facility to reach the customer's personal WWW page or e-mail account and identification from this page or account may then be transferred from the browser interface to the ancillary service facility controller or used by the retail facility to identify the customer.

This description of the preferred embodiment describes ancillary services which are provided by a retailer. It is to be understood that the present invention may also be used to allow other product or service promoters to provide ancillary services as part of a promotional program. A system implementing the present invention may have the costs associated with the ancillary services paid for by a promoter. A promoter paying for some or all of the costs of the ancillary services may thereby be allowed to give a limited or unlimited number of credits to individuals allowing the individual to use the ancillary service. Promoters which may utilize the present invention in this manner include marketing organizations, such as a marketing agency promoting a product or category of products, a credit card company desiring to increase the use of their card, and other business entities that desire to provide ancillary services as a promotional enticement.

The use of the ancillary service facilities may be provided to the customer at either no cost or at a reduced cost. If the credit is not fully paid for by the customer, a third party sponsor may pay the amount by which the price is discounted in exchange for promotional consideration. The promotional consideration given to the sponsor may include a message printed upon a certificate given to the customer, the display 503 on the facility user interface 500 may display a message in association with accepting the token, or the ancillary service facility may have general advertising by the sponsor. Promotional consideration may also be advertising posted on or near the POS system 505, distribution system 507 or on the display of an Internet terminal generated by the Internet site 508.

Providing credits to use ancillary services may also be used as an incentive for the customer to make purchases from a retail facility, encourage the use of a frequent shopper club card, or to encourage the purchase of a specified product or combination of products.

A retailer with a frequent shopper club program, which requires that a frequent shopper club identification card be read at customer checkout to receive benefits, may track the frequency of visits that a particular customer makes to the store. This allows the retailer to provide ancillary service facility usage credits, at either no costs or at reduced costs, to customers based upon their frequency of shopping visits. If a customer makes frequent shopping visits to the retailer, the retailer may wish to reward the customer with credits to use ancillary services at no cost, or to provide credits at a discount not available to less frequent shoppers. This benefit will also serve to further encourage customers to use their frequent shopper card during every visit. A similar benefit may be extended to infrequent shoppers in order to entice them to make more shopping visits. Shopper frequency may also be tracked by other customer identifications, including credit cards, checking account numbers of checks used to pay for purchases, as well as other identifiers.

A retailer or product promoter could provide a customer ancillary service usage credits in response to the customer's purchase of a specified item, a specified combination of items or a total purchase amount. The POS system 505 may be configured to recognize a customer's purchase of a specified item or combination of items and to either print a certificate on printer 513, which will also require the identification number encoded within bar code 202 to be stored into the service credit database 501, or add a credit in association with a frequent shopper's account number, as determined by reading the bar code 302 on the purchaser's frequent shopper card 201, into service credit database 501. A credit for the use of an ancillary service facility may also be provided to a shopper for purchasing merchandise or services in excess of a specified amount. Giving a customer a credit for the use of an ancillary service facility in response to a customer's purchase of a specified product, combination of products or a minimum total purchase amount may be further conditioned upon the customer's use of a frequent shopping card in association with that purchase. The credits provided in exchange for qualifying purchases may be sponsored, i.e. paid for, by either by the retailer or by a manufacturer. Manufacturers may use the present invention to sponsor promotions that provide ancillary services to customers who purchase one or a specified number of their products. The sponsor of the credit may be indicated on a certificate by the printed notice 203 or if a credit is associated with a customer's identification, a printed notice may still be produced by printer 513 and given to the customer to inform him or her of the credit provided as well as inform him or her of the sponsor of the credit.

It is obvious that numerous modifications and variations of the present invention are possible in light of the above teachings. It is therefore to be understood that within the scope of the appended claims, the invention may be practiced otherwise than as specifically described herein.

## Claims

1. A method for controlling credit for an use of an ancillary service facility (102-104) associated with a retail store which issues a credit in the form of a token (201), stores an identification (202) in machine readable form on the token for the use of the ancillary facility, machine reads (515) said identification from said token, and determines (507) whether said identification read from said token is stored in a database (501) separate from said token, **characterized in that** the method comprises the steps of:
issuing said token (201) from a retailer in response to a purchase by a customer and for the use of the ancillary service facility (102-104); and
applying (506) said credit to a cost for the use of said ancillary service facility only if said step of determining determines that said identification on said token is stored in said database.

2. A method as set forth in claim 1, **characterized in that** said ancillary service facility is a car wash.

3. A method as set forth in claim 1, **characterized in that** said ancillary service facility is a compressed air dispenser.

4. A method as set forth in claim 1, **characterized in that** said ancillary service facility is a vacuum cleaner.

5. A method as set forth in claim 1, **characterized in that** said step of issuing is performed in response to data received from a retail sales facility.

6. A method as set forth in claim 1, **characterized in that** said step of issuing is performed in response to data received from a fuel sales facility.

7. A method as set forth in claim 1, **characterized in that** said step of issuing a token is performed at an automated kiosk.

8. A method as set forth in claim 1, **characterized in that** said step of issuing is performed in response to data received from an Internet site.

9. A method as set forth in claim 8, **characterized in that** said Internet site comprises an automated e-mail facility.

10. A method as set forth in claim 8, further comprising the step of communicating an indication of said token through electronic communications.

11. A method as set forth in Claim 10, **characterized in that** said step of communicating comprises the step of a customer providing an indication of said identification to said Internet site.

12. A method as set forth in claim 10, further comprising the step of communicating data describing a token to a user of said Internet site.

13. A method as set forth in claim 12, **characterized in that** said token is a coupon printed by an Internet terminal.

14. A method as set forth in claim 1, **characterized in that** said step of issuing is performed in response to a customer's membership in a frequent shopper's club, such that said customer is associated with said identification.

15. A method as set forth in claim 1, **characterized in that** said token comprises a printed coupon and said identification encoded within a barcode.

16. A method as set forth in claim 15, **characterized in that** said step of machine reading comprises reading said barcode.

17. A method as set forth in claim 15, **characterized in that** said bar code includes a self authenticating identification.

18. A method as set forth in claim 1, **characterized in that** said token comprises a frequent shopper card and said identification is encoded within one of a printed barcode and a magnetic stripe.

19. A method as set forth in claim 1, **characterized in that** said token comprises a smart card and said identification is encoded within said smart card.

20. A method as set forth in claim 1, **characterized in that** said identification is a customer telephone number and said step of determining comprises manually entering said customer telephone number.

21. A method as set forth in claim 1, **characterized in that** said token comprises a radio frequency identification device and said step of determining comprises reading said radio frequency identification device.

22. A method as set forth in claim 1, **characterized in that** said token comprises a radio telephone and said step of determining comprises reading a transmitted identification from said radio telephone.

23. A method as set forth in claim 1, **characterized in that** said token comprises an Internet based identification associated with an individual and said step of determining comprises determining said Internet based identification.

24. A method as set forth in claim 23, **characterized in that** said Internet based identification comprises a Universal Resource Locator associated with the individual.

25. A method as set forth in claim 23, **characterized in that** said Internet based identification comprises an e-mail account associated with the individual.

26. A method as set forth in claim 23, **characterized in that** said step of determining comprises determining said Internet based identification by an individual's operation of an associated Internet interface.

27. A method as set forth in claim 1, **characterized in that** said identification comprises a payment account number and said step of determining comprises determining a payment account number.

28. A method as set forth in claim 27, **characterized in that** said payment account is associated with a credit card and said identification is encoded into a magnetic stripe contained on said credit card.

29. A method as set forth in claim 27, **characterized in that** said payment account is associated with a checking account and said step of determining comprises reading an account number of said checking account.

30. A method as set forth in claim 1, **characterized in that** said step of issuing is performed in response to an use of an Internet site associated with an individual.

31. A method as set forth in claim 30, **characterized in that** said Internet site is a World Wide Web site associated with an individual.

32. A method as set forth in claim 1, **characterized in that** said step of issuing is performed in response to a retail purchase from a retail store by a customer associated with said identification.

33. A method as set forth in claim 32, **characterized in that** said step of issuing is performed in response to an ancillary service credit purchase, and that ancillary service credit purchase is discounted by a promotional amount.

34. A method as set forth in claim 33, **characterized in that** a sponsor pays of said promotional amount.

35. A method as set forth in claim 34, **characterized in that** said token includes information identifying said sponsor.

36. A method as set forth in claim 34, **characterized in that** a notice identifying said sponsor is provided to said customer.

37. A method as set forth in claim 36, **characterized in that** said sponsor is a product manufacturer.

38. A method as set forth in claim 36, **characterized in that** said sponsor is a promotional agency.

39. A system for controlling credit for an use of an ancillary service facility (102), (103), (104) having means (505) for issuing a credit in the form of a token (201) and storing an identification (202) in machine readable form for the use of the ancillary facility (102), (103), (104), means (515) for machine reading said identification (202) from said token (201), and means (507) for determining whether said identification (202) read from said token (201) is stored in a database (501) separate from said token (201), **characterized in that**:
said means (501) for issuing a credit issues said token (201) from a retailer in response to a purchase by a customer and for the use of the ancillary service facility (102), (103), (104); and
a controller,(506) for applying said credit to a cost for the use of said ancillary service facility applies said credit only if said step of determining determines that said identification on said token is stored in said database.

40. A system as set forth in claim 39, **characterized in that** said ancillary service facility (102), (103), (104) comprises a car wash (102).

41. A system as set forth in claim 39, **characterized in that** said ancillary service facility (102), (103), (104) comprises a compressed air dispenser (103).

42. A system as set forth in claim 39, **characterized in that** said ancillary service facility (102), (103), (104) comprises a vacuum cleaner (104).

43. A system as set forth in claim 39, **characterized in that** said means (505) for issuing a credit operates in response to data received from a retail sales facility (101).

44. A system as set forth in claim 39, **characterized in that** said means (505) for issuing a credit operates in response to data received from a fuel sales facility (101).

45. A system as set forth in claim 39, **characterized in that** said means (505) for issuing a credit operates in response to data received from an automated kiosk (507).

46. A system as set forth in claim 39, **characterized in that** said means (505) for issuing a credit operates in response to data received from an Internet site (508).

47. A system as set forth in claim 46, **characterized in that** said Internet site (508) comprises an automated e-mail facility.

48. A system as set forth in claim 46, further comprising means (515) for communicating an indication of said token through electronic communications.

49. A system as set forth in claim 48, **characterized in that** said means (515) for communicating comprises an acceptance device (600) configured to accept a customer account number operating in conjunction with said Internet site (508).

50. A system as set forth in claim 48, **characterized in that** said means (515) for communicating data describes said token (201) to a user of said Internet site (508).

51. A system as set forth in claim 50, **characterized in that** said token (201) comprises a coupon (301) printed by an Internet terminal (513).

52. A system as set forth in claim 39, **characterized in that** said means (505) for issuing operates in response to a determination that a customer associated with said identification is a member of a frequent shopper club.

53. A system as set forth in claim 39, **characterized in that** said token (201) comprises a printed coupon (301) and said identification (202) is encoded within a barcode (302).

54. A system as set forth in claim 53, **characterized in that** said means (515) for machine reading comprises a read device configured to optically read said barcode (302).

55. A system as set forth in claim 53, **characterized in that** said barcode (302) comprises a self authenticating identification.

56. A system as set forth in claim 39, **characterized in that** said token (201) comprises a frequent shopper card (301), respectively, and said identification (302) is encoded within one of a printed barcode (302) and a magnetic stripe (402).

57. A system as set forth in claim 39, **characterized in that** said token (201) comprises a smart card and said identification is encoded within said smart card.

58. A system as set forth in claim 39, **characterized in that** said token (201) comprises a customer telephone number and said means (507) for determining comprises a keypad (602) which allows manual entry of said customer telephone number.

59. A system as set forth in claim 39, **characterized in that** said token (201) comprises a Radio Frequency Identification device and said means (507) for determining comprises a Radio Frequency Identification device interrogator configured to read said Radio Frequency Identification device.

60. A system as set forth in claim 39, **characterized in that** said token (201) comprises a radio telephone and said means (507) for determining comprises a radio transceiver configured to read a transmitted identification from said radio telephone.

61. A system as set forth in claim 39, **characterized in that** said token (201) comprises an Internet based identification associated with an individual and said means (507) for determining determines said Internet based identification.

62. A system as set forth in claim 61, **characterized in that** said Internet based identification comprises a Universal Resource Locator associated with the individual.

63. A system as set forth in claim 61, **characterized in that** said Internet based identification comprises an e-mail account associated with the individual.

64. A system as set forth in claim 61, **characterized in that** said means (507) for determining determines said Internet based identification by an individual's operation of an associated Internet interface.

65. A system as set forth in claim 39, **characterized in that** said token (201) includes a payment account number and said means (507) for determining comprises means for determining said payment account number.

66. A system as set forth in claim 65, **characterized in that** said token (201) comprises a credit card and said identification is a number encoded within a magnetic stripe on said credit card.

67. A system as set forth in claim 65, **characterized in that** said token (201) is a check and said identification is a checking account number encoded within said check.

68. A system as set forth in claim 39, **characterized in that** said means (505) for issuing operates in response to a use of an Internet site (508).

69. A system as set forth in claim 68, **characterized in that** said Internet site (508) comprises a World Wide Web site.

70. A system as set forth in claim 39, **characterized in that** said means (505) for issuing operates in response to a retail purchase from said retail store by a customer associated with said identification.

71. A system as set forth in claim 70, **characterized in that** said means (505) for issuing operates in response to an ancillary service use credit purchase and said ancillary service use credit purchase is discounted by a promotional amount.

72. A system as set forth in claim 71, **characterized in that** a sponsor pays said promotional amount.

73. A system as set forth in claim 72, **characterized in that** said token (201) contains information identifying said sponsor.

74. A system as set forth in claim 72, further comprising means for providing a notice identifying said sponsor to said customer.

75. A system as set forth in claim 72, **characterized in that** said sponsor comprises a product manufacturer.

76. A system as set forth in claim 72, **characterized in that** said sponsor comprises a promotion agency.

## Patentansprüche

1. Verfahren zur Regelung der Gutschrift für die Nutzung einer Zusatzdiensteinrichtung (102-104), die einem Einzelhandelsgeschäft zugeordnet ist, das eine Gutschrift in Form eines Gutscheins (201) ausgibt, wobei eine Identifikation (202) in maschinenlesbarer Form auf dem Gutschein zur Nutzung der Zusatzeinrichtung gespeichert wird, wobei die genannte Identifikation von dem Gutschein maschinengelesen (515) wird, und wobei bestimmt wird (507), ob die genannte von dem genannten Gutschein gelesene Identifikation in einer Datenbank (501) getrennt von den genannten Gutscheinen gespeichert wird, **dadurch gekennzeichnet, dass** das genannte Verfahren die folgenden Schritte umfasst:
Ausgeben des genannten Gutschein (201) von einem Einzelhändler als Reaktion auf den Kauf durch einen Kunden und zur Nutzung der Zusatzdiensteinrichtung (102-104); und
Anrechnen (506) der genannten Gutschrift auf die Kosten für die Nutzung der genannten Zusatzdiensteinrichtung nur dann, wenn in dem genannten Schritt des Bestimmens bestimmt wird, dass die genannte Identifikation auf dem genannten Gutschein in der genannten Datenbank gespeichert ist.

2. Verfahren nach Anspruch 1, **dadurch gekennzeichnet, dass** es sich bei der genannten Zusatzdiensteinrichtung um eine Autowaschanlage handelt.

3. Verfahren nach Anspruch 1, **dadurch gekennzeichnet, dass** es sich bei der genannten Zusatzdiensteinrichtung um einen Druckluftspender handelt.

4. Verfahren nach Anspruch 1, **dadurch gekennzeichnet, dass** es sich bei der genannten Zusatzdiensteinrichtung um einen Staubsauger handelt.

5. Verfahren nach Anspruch 1, **dadurch gekennzeichnet, dass** der genannte Schritt der Ausgabe als Reaktion auf von einer Einzelhandelsverkaufseinrichtung empfangene Daten durchgeführt wird.

6. Verfahren nach Anspruch 1, **dadurch gekennzeichnet, dass** der genannte Schritt der Ausgabe als Reaktion auf von einer Kraftstoffverkaufseinrichtung empfangene Daten durchgeführt wird.

7. Verfahren nach Anspruch 1, **dadurch gekennzeichnet, dass** der genannte Schritt der Ausgabe eines Gutscheins an einem automatisierten Kiosk durchgeführt wird.

8. Verfahren nach Anspruch 1, **dadurch gekennzeichnet, dass** der genannte Schritt der Ausgabe als Reaktion auf von einer Internet-Website empfangene Daten durchgeführt wird.

9. Verfahren nach Anspruch 8, **dadurch gekennzeichnet, dass** die genannte Internet-Website eine automatisierte E-Mail-Einrichtung umfasst.

10. Verfahren nach Anspruch 8, wobei das Verfahren ferner den Schritt der Kommunikation einer Anzeige des genannten Gutscheins mittels elektronischer Kommunikationen umfasst.

11. Verfahren nach Anspruch 10, **dadurch gekennzeichnet, dass** der genannte Schritt der Kommunikation den Schritt umfasst, dass ein Kunde eine Anzeige der genannten Identifikation an die genannte Internet-Website vorsieht.

12. Verfahren nach Anspruch 10, wobei das Verfahren ferner den Schritt der Kommunikation von Daten umfasst, die einen Gutschein einem Benutzer der genannten Internet-Website beschreiben.

13. Verfahren nach Anspruch 12, **dadurch gekennzeichnet, dass** es sich bei dem genannten Gutschein um einen durch einen Internet-Terminal erzeugten Gutschein handelt.

14. Verfahren nach Anspruch 1, **dadurch gekennzeichnet, dass** der genannte Schritt der Ausgabe als Reaktion auf eine Mitgliedschaft eines Kunden in einer Käufergemeinschaft durchgeführt wird, so dass der genannte Kunde der genannten Identifikation zugeordnet ist.

15. Verfahren nach Anspruch 1, **dadurch gekennzeichnet, dass** der genannte Gutschein einen gedruckten Coupon umfasst, und wobei die genannte Identifikation in einem Strichcode codiert ist.

16. Verfahren nach Anspruch 15, **dadurch gekennzeichnet, dass** der genannte Schritt des Maschinenlesens das Lesen des genannten Strichcodes umfasst.

17. Verfahren nach Anspruch 15, **dadurch gekennzeichnet, dass** der genannte Strichcode selbst eine sich selbst authentifizierende Identifikation aufweist.

18. Verfahren nach Anspruch, **dadurch gekennzeichnet, dass** der genannte Gutschein eine Kundenkarte umfasst, und wobei die genannte Identifikation in einem gedruckten Strichcode oder einem Magnetsteifen codiert ist.

19. Verfahren nach Anspruch 1, **dadurch gekennzeichnet, dass** der genannte Gutschein eine Smartcard umfasst, und wobei die genannte Identifikation in der genannten Smartcard codiert ist.

20. Verfahren nach Anspruch 1, **dadurch gekennzeichnet, dass** es sich bei der genannten Identifikation um eine Kundentelefonnummer handelt, und wobei der genannte Schritt des Bestimmens die manuelle Eingabe der genannten Kundentelefonnummer umfasst.

21. Verfahren nach Anspruch 1, **dadurch gekennzeichnet, dass** der genannte Gutschein eine Hochfrequenz-Identifikationsvorrichtung umfasst, und wobei der genannte Schritt des Bestimmens das Lesen der genannten Hochfrequenz-Identifikationsvorrichtung umfasst.

22. Verfahren nach Anspruch 1, **dadurch gekennzeichnet, dass** der genannte Gutschein ein Funktelefon umfasst, und wobei der genannte Schritt des Bestimmens das Lesen einer übermittelten Identifikation von dem genannten Funktelefon umfasst.

23. Verfahren nach Anspruch 1, **dadurch gekennzeichnet, dass** der genannte Gutschein eine Identifikation auf Internetbasis umfasst, die einer Einzelperson zugeordnet ist, und wobei der genannte Schritt des Bestimmens das Bestimmen der genannten Identifikation auf Internetbasis umfasst.

24. Verfahren nach Anspruch 23, **dadurch gekennzeichnet, dass** die genannte Identifikation auf Internetbasis einen der Einzelperson zugeordneten Universal Resource Locator umfasst.

25. Verfahren nach Anspruch 23, **dadurch gekennzeichnet, dass** die genannte Identifikation auf Internetbasis ein der Einzelperson zugeordnetes E-Mail-Konto umfasst.

26. Verfahren nach Anspruch 23, **dadurch gekennzeichnet, dass** der genannte Schritt des Bestimmens das Bestimmen der genannten Identifikation auf Internetbasis durch den Betrieb einer zugeordneten Internet-Schnittstelle durch eine Einzelperson.

27. Verfahren nach Anspruch 1, **dadurch gekennzeichnet, dass** die genannte Identifikation eine Zahlungskontonummer umfasst, und wobei der genannte Schritt des Bestimmens das Bestimmen einer Zahlungskontonummer umfasst.

28. Verfahren nach Anspruch 27, **dadurch gekennzeichnet, dass** das genannte Zahlungskonto einer Kreditkarte zugeordnet ist, und wobei die genannte Identifikation in einen Magnetstreifen auf der genannten Kreditkarte codiert ist.

29. Verfahren nach Anspruch 27, **dadurch gekennzeichnet, dass** das genannte Zahlungskonto einem Girokonto zugeordnet ist, und wobei der genannte Schritt des Bestimmens das Lesen einer Kontonummer des genannten Girokontos umfasst.

30. Verfahren nach Anspruch 1, **dadurch gekennzeichnet, dass** der genannte Schritt der Ausgabe als Reaktion auf die Nutzung einer Internet-Website durchgeführt wird, die einer Einzelperson zugeordnet ist.

31. Verfahren nach Anspruch 30, **dadurch gekennzeichnet, dass** es sich bei der genannten Internet-Website um eine Site des World Wide Web handelt, die einer Einzelperson zugeordnet ist.

32. Verfahren nach Anspruch 1, **dadurch gekennzeichnet, dass** der genannte Schritt der Ausgabe als Reaktion auf einen Einzelhandelskauf in einem Einzelhandelsgeschäft durch einen Kunden durchgeführt wird, der der genannten Identifikation zugeordnet ist.

33. Verfahren nach Anspruch 32, **dadurch gekennzeichnet, dass** der genannte Schritt der Ausgabe als Reaktion auf einen Zusatzdienst-Gutschriftkauf durchgeführt wird, und wobei für den genannten Zusatzdienst-Gutschriftkauf ein Nachlass in Höhe eines Betrags einer verkaufsfördernden Maßnahme gewährt wird.

34. Verfahren nach Anspruch 33, **dadurch gekennzeichnet, dass** ein Projektträger die Kosten für den Betrag einer verkaufsfördernden Maßnahme übernimmt.

35. Verfahren nach Anspruch 34, **dadurch gekennzeichnet, dass** der genannte Gutschein Informationen aufweist, die den genannten Sponsor identifizieren.

36. Verfahren nach Anspruch 34, **dadurch gekennzeichnet, dass** der Kunde eine Mitteilung erhält, welche den genannten Sponsor identifiziert.

37. Verfahren nach Anspruch 36, **dadurch gekennzeichnet, dass** es sich bei dem genannten Sponsor um einen Produkthersteller handelt.

38. Verfahren nach Anspruch 36, **dadurch gekennzeichnet, dass** es sich bei dem genannten Sponsor um eine Promotionagentur handelt.

39. System zur Regelung der Gutschrift für die Nutzung einer Zusatzdiensteinrichtung (102), (103), (104), mit einer Einrichtung (505) zur Ausgabe einer Gutschrift in Form eines Gutscheins (201) und Speichern einer Identifikation (202) in maschinenlesbarer Form für die Nutzung der Zusatzeinrichtung (102), (103), (104), einer Einrichtung (515) zum Maschinenlesen der genannten Identifikation (202) von dem genannten Gutschein (201) und einer Einrichtung (507) zum Bestimmen, ob die von dem genannten Gutschein (201) gelesene Identifikation (202) in einer Datenbank (501) getrennt von dem genannten Gutschein (201) gespeichert ist; **dadurch gekennzeichnet, dass**:
die genannte Einrichtung (501) zur Ausgabe einer Gutschrift den genannten Gutschein (201) von einem Einzelhändler aus Reaktion auf den Kauf durch einen Kunden ausgibt sowie zur Nutzung der Zusatzdiensteinrichtung (102), (103), (104); und
eine Steuereinrichtung (506) zur Anrechnung der genannten Gutschrift auf die Kosten für die Nutzung der genannten Zusatzdiensteinrichtung die genannte Gutschrift nur dann anrechnet, wenn der genannte Schritt des Bestimmens bestimmt, dass die genannte Identifikation auf dem genannten Gutschein in der genannten Datenbank gespeichert ist.

40. System nach Anspruch 39, dass es sich bei der genannten Zusatzdiensteinrichtung (102), (103), (104) um eine Autowaschanlage (102) handelt.

41. System nach Anspruch 39, **dadurch gekennzeichnet, dass** es sich bei der genannten Zusatzdiensteinrichtung (102), (103), (104) um einen Druckluftspender (103) handelt.

42. System nach Anspruch 39, **dadurch gekennzeichnet, dass** es sich bei der genannten Zusatzdiensteinrichtung (102), (103), (104) um einen Staubsauger (104) handelt.

43. System nach Anspruch 39, **dadurch gekennzeichnet, dass** die genannte Einrichtung (505) zur Ausgabe einer Gutschrift als Reaktion auf von einer Einzelhandelsverkaufseinrichtung (101) empfangene Daten arbeitet.

44. System nach Anspruch 39, **dadurch gekennzeichnet, dass** die genannte Einrichtung (505) zur Ausgabe einer Gutschrift als Reaktion auf von einer Kraftstoffverkaufseinrichtung (101) empfangene Daten arbeitet.

45. System nach Anspruch 39, **dadurch gekennzeichnet, dass** die genannte Einrichtung (505) zur Ausgabe einer Gutschrift als Reaktion auf von einem automatisierten Kiosk (507) empfangene Daten arbeitet.

46. System nach Anspruch 39, **dadurch gekennzeichnet, dass** die genannte Einrichtung (505) zur Ausgabe einer Gutschrift als Reaktion auf von einer Internet-Website (508) empfangene Daten arbeitet.

47. System nach Anspruch 46, **dadurch gekennzeichnet, dass** die genannte Internet-Website (508) eine automatisierte E-Mail-Einrichtung umfasst.

48. System nach Anspruch 46, wobei das System ferner eine Einrichtung (515) zur Kommunikation einer Anzeige des genannten Gutscheins mittels elektronischer Kommunikation umfasst.

49. System nach Anspruch 48, **dadurch gekennzeichnet, dass** die genannte Einrichtung (515) zur Kommunikation eine Annahmevorrichtung (600) umfasst, die so konfiguriert ist, dass sie eine Kundenkontonummer annimmt, die in Verbindung mit der genannten Internet-Website (508) arbeitet.

50. System nach Anspruch 48, **dadurch gekennzeichnet, dass** die genannte Einrichtung (515) zur Kommunikation von Daten den genannten Gutschein (201) einem Benutzer der genannten Internet-Website (508) beschreibt.

51. System nach Anspruch 50, **dadurch gekennzeichnet, dass** der genannte Gutschein (201) einen über einen Internet-Terminal (513) gedruckten Coupon (301) umfasst.

52. System nach Anspruch 39, **dadurch gekennzeichnet, dass** die genannte Einrichtung (505) zur Ausgabe als Reaktion auf eine Bestimmung arbeitet, dass ein der genannten Identifikation zugeordneter Kunde ein Mitglied einer Käufergemeinschaft ist.

53. System nach Anspruch 39, **dadurch gekennzeichnet, dass** der genannte Gutschein (201) einen gedruckten Coupon (301) umfasst, und wobei die genannte Identifikation (202) in einen Strichcode (302) codiert ist.

54. System nach Anspruch 53, **dadurch gekennzeichnet, dass** die genannte Einrichtung (515) zum Maschinenlesen eine Lesevorrichtung umfasst, die zum optischen Lesen des genannten Strichcodes (302) konfiguriert ist.

55. System nach Anspruch 53, **dadurch gekennzeichnet, dass** der genannte Strichcode (302) eine selbst authentifizierende Identifikation umfasst.

56. System nach Anspruch 39, **dadurch gekennzeichnet, dass** der genannte Gutschein (201) eine Kundenkarte (301) umfasst, und wobei die genannte Identifikation (302) entsprechend in einen gedruckten Strichcode (302) oder einen Magnetstreifen (402) codiert ist.

57. System nach Anspruch 39, **dadurch gekennzeichnet, dass** der genannte Gutschein (201) eine Smartcard umfasst, und wobei die genannte Identifikation in die genannte Smartcard codiert ist.

58. System nach Anspruch 39, **dadurch gekennzeichnet, dass** der genannte Gutschein (201) eine Kundentelefonnummer umfasst, und wobei die genannte Einrichtung (507) zur Bestimmung eine Tastatur (602) umfasst, die eine manuelle Eingabe der genannten Kundentelefonnummer ermöglicht.

59. System nach Anspruch 39, **dadurch gekennzeichnet, dass** der genannte Gutschein (201) eine Hochfrequenz-Identifikationsvorrichtung umfasst, und wobei die genannte Einrichtung (507) zur Bestimmung eine Abfrageeinrichtung für die genannte Hochfrequenz-Identifikationsvorrichtung umfasst, die so konfiguriert ist, dass sie die genannte Hochfrequenz-Identifikationsvorrichtung liest.

60. System nach Anspruch 39, **dadurch gekennzeichnet, dass** der genannte Gutschein (201) ein Funktelefon umfasst, und wobei die genannte Einrichtung (507) zur Bestimmung einen Funk-Sender/Empfänger umfasst, der so konfiguriert ist, dass er eine übermittelte Identifikation von dem genannten Funktelefon liest.

61. System nach Anspruch 39, **dadurch gekennzeichnet, dass** der genannte Gutschein (201) eine Identifikation auf Internetbasis umfasst, die einer Einzelperson zugeordnet ist, und wobei die genannte Einrichtung (507) zur Bestimmung die genannte Identifikation auf Internetbasis bestimmt.

62. System nach Anspruch 61, **dadurch gekennzeichnet, dass** die genannte Identifikation auf Internetbasis einen der Einzelperson zugeordneten Universal Resource Locator umfasst.

63. System nach Anspruch 61, **dadurch gekennzeichnet, dass** die genannte Identifikation auf Internetbasis ein der Einzelperson zugeordnetes E-Mail-Konto umfasst.

64. System nach Anspruch 61, **dadurch gekennzeichnet, dass** die genannte Einrichtung (507) zur Bestimmung die genannte Identifikation auf Internetbasis durch den Betrieb einer zugeordneten Internet-Schnittstelle durch eine Einzelperson bestimmt.

65. System nach Anspruch 39, **dadurch gekennzeichnet, dass** der genannte Gutschein (201) eine Zahlungskontonummer umfasst, und wobei die genannte Einrichtung (507) zur Bestimmung eine Einrichtung zur Bestimmung der genannten Zahlungskontonummer umfasst.

66. System nach Anspruch 65, **dadurch gekennzeichnet, dass** der genannte Gutschein (201) eine Kreditkarte umfasst, und wobei die genannte Identifikationsnummer in einen Magnetstreifen auf der genannten Kreditkarte codiert ist.

67. System nach Anspruch 65, **dadurch gekennzeichnet, dass** der genannte Gutschein (201) einen Scheck darstellt, und wobei es sich bei der genannten Identifikation um eine Girokontonummer handelt, die in den genannten Scheck codiert ist.

68. System nach Anspruch 39, **dadurch gekennzeichnet, dass** die genannte Einrichtung (505) zur Ausgabe als Reaktion auf die Nutzung einer Internet-Website (508) arbeitet.

69. System nach Anspruch 68, **dadurch gekennzeichnet, dass** es sich bei der genannten Internet-Website (508) um eine Site des World Wide Web handelt.

70. System nach Anspruch 39, **dadurch gekennzeichnet, dass** die genannte Einrichtung (505) zur Ausgabe als Reaktion auf einen Einzelhandelskauf in einem Einzelhandelsgeschäft durch einen Kunden arbeitet, der der genannten Identifikation zugeordnet ist.

71. System nach Anspruch 70, **dadurch gekennzeichnet, dass** die genannte Einrichtung (505) zur Ausgabe als Reaktion auf einen Zusatzdienst-Gutschriftkauf arbeitet, und wobei für den genannten Zusatzdienst-Gutschriftkauf ein Nachlass in Höhe eines Betrags einer verkaufsfördernden Maßnahme gewährt wird.

72. System nach Anspruch 71, **dadurch gekennzeichnet, dass** ein Projektträger die Kosten für den Betrag einer verkaufsfördernden Maßnahme übernimmt.

73. System nach Anspruch 72, **dadurch gekennzeichnet, dass** der genannte Gutschein (201) Informationen aufweist, die den genannten Sponsor identifizieren.

74. System nach Anspruch 72, wobei das System ferner eine Einrichtung aufweist, um eine Mitteilung vorzusehen, die den genannten Sponsor für den genannten Kunden identifiziert.

75. System nach Anspruch 72, **dadurch gekennzeichnet, dass** der genannte Sponsor einen Produkthersteller einschließt.

76. System nach Anspruch 72, **dadurch gekennzeichnet, dass** der genannte Sponsor eine Promotionagentur einschließt.

## Revendications

1. Procédé pour contrôler le crédit d'utilisation d'une installation de services auxiliaires (102-104) associée à un magasin de détail qui délivre un crédit sous la forme d'un bon (201), stocke une identification (202) sous une forme lisible par une machine sur le bon pour l'utilisation de l'installation auxiliaire, lit par une machine (515) ladite identification depuis ledit bon, et détermine (507) si ladite identification lue à partir dudit bon est stockée dans une base de données (501) séparée dudit bon, **caractérisé en ce que** ledit procédé comprend les étapes consistant à :
délivrer ledit bon (201) à partir d'un détaillant en réponse à un achat par un client et pour l'utilisation d'une installation de services auxiliaires (102-104) ; et
appliquer (506) ledit crédit à un coût pour l'utilisation de ladite installation de services auxiliaires uniquement si ladite étape de détermination détermine que ladite identification sur ledit bon est stockée dans ladite base de données.

2. Procédé selon la revendication 1, **caractérisé en ce que** ladite installation de services auxiliaires est un portique de lavage d'automobiles.

3. Procédé selon la revendication 1, **caractérisé en ce que** ladite installation de services auxiliaires est un distributeur d'air comprimé.

4. Procédé selon la revendication 1, **caractérisé en ce que** ladite installation de services auxiliaires est un aspirateur.

5. Procédé selon la revendication 1, **caractérisé en ce que** ladite étape de délivrance est réalisée en réponse à des données reçues d'une installation de vente au détail.

6. Procédé selon la revendication 1, **caractérisé en ce que** ladite étape de délivrance est réalisée en réponse à des données reçues d'une installation de vente de carburant.

7. Procédé selon la revendication 1, **caractérisé en ce que** ladite étape de délivrance d'un bon est réalisée dans un kiosque automatisé.

8. Procédé selon la revendication 1, **caractérisé en ce que** ladite étape de délivrance est réalisée en réponse à des données reçues d'un site Internet.

9. Procédé selon la revendication 8, **caractérisé en ce que** ledit site Internet comprend une installation d'e-mail automatisée.

10. Procédé selon la revendication 8, comprenant en outre l'étape consistant à communiquer une indication dudit bon via une communication électronique.

11. Procédé selon la revendication 10, **caractérisé en ce que** ladite étape de communication comprend l'étape consistant pour un client à communiquer une indication de ladite identification audit site Internet.

12. Procédé selon la revendication 10, comprenant en outre l'étape consistant à communiquer des données décrivant un bon à un utilisateur dudit site Internet.

13. Procédé selon la revendication 12, **caractérisé en ce que** ledit bon est un coupon imprimé par un terminal Internet.

14. Procédé selon la revendication 1, **caractérisé en ce que** ladite étape de délivrance est réalisée en réponse à l'adhésion d'un client à un club de clients réguliers, tel que ledit client est associé à ladite identification.

15. Procédé selon la revendication 1, **caractérisé en ce que** ledit bon comprend un coupon imprimé et **en ce que** ladite identification est codée dans un code-barre.

16. Procédé selon la revendication 15, **caractérisé en ce que** ladite étape de lecture par une machine comprend la lecture dudit code-barre.

17. Procédé selon la revendication 15, **caractérisé en ce que** ledit code-barre comprend une identification à authentification automatique.

18. Procédé selon la revendication 1, **caractérisé en ce que** ledit bon est une carte de client régulier et **en ce que** ladite identification est codée dans l'un d'un code-barre imprimé et d'une bande magnétique.

19. Procédé selon la revendication 1, **caractérisé en ce que** ledit bon comprend une carte à mémoire et **en ce que** ladite identification est codée dans ladite carte à mémoire.

20. Procédé selon la revendication 1, **caractérisé en ce que** ladite identification est un numéro de téléphone de client et **en ce que** ladite étape de détermination comprend l'entrée manuelle dudit numéro de téléphone de client.

21. Procédé selon la revendication 1, **caractérisé en ce que** ledit bon comprend un dispositif d'identification radiofréquence et **en ce que** ladite étape de détermination comprend la lecture dudit dispositif d'identification radiofréquence.

22. Procédé selon la revendication 1, **caractérisé en ce que** ledit bon comprend un radiotéléphone et **en ce que** ladite étape de détermination comprend la lecture d'une identification transmise depuis ledit radiotéléphone.

23. Procédé selon la revendication 1, **caractérisé en ce que** ledit bon comprend une identification basée sur Internet associée à un individu et **en ce que** ladite étape de détermination comprend la détermination de ladite identification basée sur Internet.

24. Procédé selon la revendication 23, **caractérisé en ce que** ladite identification basée sur Internet comprend un Universal Resource Locator associé à l'individu.

25. Procédé selon la revendication 23, **caractérisé en ce que** ladite identification basée sur Internet comprend un compte e-mail associé à l'individu.

26. Procédé selon la revendication 23, **caractérisé en ce que** ladite étape de détermination comprend la détermination de ladite identification basée sur Internet par l'utilisation par un individu d'une interface Internet associée.

27. Procédé selon la revendication 1, **caractérisé en ce que** ladite identification comprend un numéro de compte de paiement et **en ce que** ladite étape de détermination comprend la détermination d'un numéro de compte de paiement.

28. Procédé selon la revendication 27, **caractérisé en ce que** ledit compte de paiement est associé à une carte de crédit et **en ce que** ladite identification est codée dans une bande magnétique contenue sur ladite carte de crédit.

29. Procédé selon la revendication 27, **caractérisé en ce que** ledit compte de paiement est associé à un compte chèque et **en ce que** ladite étape de détermination comprend la lecture d'un numéro de compte chèque dudit compte chèque.

30. Procédé selon la revendication 1, **caractérisé en ce que** ladite étape de délivrance est réalisée en réponse à une utilisation d'un site Internet associé à un individu.

31. Procédé selon la revendication 30, **caractérisé en ce que** ledit site Internet est un site World Wide Web associé à un individu.

32. Procédé selon la revendication 1, **caractérisé en ce que** ladite étape de délivrance est réalisée en réponse à un achat au détail dans un magasin de détail par un client associé à ladite identification.

33. Procédé selon la revendication 32, **caractérisé en ce que** ladite étape de délivrance est réalisée en réponse à un achat de crédit de service auxiliaire et **en ce que** ledit achat de crédit de service auxiliaire est diminué d'un montant promotionnel.

34. Procédé selon la revendication 33, **caractérisé en ce qu'**un parrain paie ledit montant promotionnel.

35. Procédé selon la revendication 34, **caractérisé en ce que** ledit bon comprend des informations identifiant ledit parrain.

36. Procédé selon la revendication 34, **caractérisé en ce qu'**un avis identifiant ledit parrain est fourni audit client.

37. Procédé selon la revendication 36, **caractérisé en ce que** ledit parrain est un fabricant de produits.

38. Procédé selon la revendication 36, **caractérisé en ce que** ledit parrain est une agence promotionnelle.

39. Système pour contrôler le crédit d'utilisation d'une installation de services auxiliaires (102), (103), (104) ayant des moyens (505) pour délivrer un crédit sous la forme d'un bon (201) et pour stocker une identification (202) sous une forme lisible par une machine pour l'utilisation de l'installation auxiliaire (102), (103), (104), des moyens (515) pour lire par une machine ladite identification (202) depuis ledit bon (201), et des moyens (507) pour déterminer si ladite identification (202) lue à partir dudit bon (201) est stockée dans une base de données (501) séparée dudit bon (201), **caractérisé en ce que** :
lesdits moyens (501) pour délivrer un crédit délivrent ledit bon (201) à partir d'un détaillant en réponse à un achat par un client et pour l'utilisation d'une installation de services auxiliaires (102), (103), (104) ; et
un dispositif de contrôle (506) pour appliquer ledit crédit à un coût pour l'utilisation de ladite installation de services auxiliaires applique ledit crédit uniquement si ladite étape de détermination détermine que ladite identification sur ledit bon est stockée dans ladite base de données.

40. Système selon la revendication 39, **caractérisé en ce que** ladite installation de services auxiliaires (102), (103), (104) comprend un portique de lavage d'automobiles (102).

41. Système selon la revendication 39, **caractérisé en ce que** ladite installation de services auxiliaires (102), (103), (104) comprend un distributeur d'air comprimé (103).

42. Système selon la revendication 39, **caractérisé en ce que** ladite installation de services auxiliaires (102), (103), (104) comprend un aspirateur (104).

43. Système selon la revendication 39, **caractérisé en ce que** lesdits moyens (505) pour délivrer un crédit fonctionnent en réponse à des données reçues d'une installation de vente au détail (101).

44. Système selon la revendication 39, **caractérisé en ce que** lesdits moyens (505) pour délivrer un crédit fonctionnent en réponse à des données reçues d'une installation de vente de carburant (101).

45. Système selon la revendication 39, **caractérisé en ce que** lesdits moyens (505) pour délivrer un crédit fonctionnent en réponse à des données reçues d'un kiosque automatisé (507).

46. Système selon la revendication 39, **caractérisé en ce que** lesdits moyens (505) pour délivrer un crédit fonctionnent en réponse à des données reçues d'un site Internet (508).

47. Système selon la revendication 46, **caractérisé en ce que** ledit site Internet comprend une installation e-mail automatisée.

48. Système selon la revendication 46, comprenant en outre des moyens (515) pour communiquer une indication dudit bon via une communication électronique.

49. Système selon la revendication 48, **caractérisé en ce que** lesdits moyens (515) pour communiquer comprennent un dispositif d'acceptation (600) configuré pour accepter un numéro de compte client fonctionnant parallèlement audit site Internet (508).

50. Système selon la revendication 48, **caractérisé en ce que** lesdits moyens (515) pour communiquer des données décrivent ledit bon (210) à un utilisateur dudit site Internet (508).

51. Système selon la revendication 50, **caractérisé en ce que** ledit bon (201) comprend un coupon (301) imprimé par un terminal Internet.

52. Système selon la revendication 39, **caractérisé en ce que** lesdits moyens (505) pour délivrer fonctionnent en réponse à une détermination selon laquelle un client associé à ladite identification est un membre d'un club de clients réguliers.

53. Système selon la revendication 39, **caractérisé en ce que** ledit bon (201) comprend un coupon imprimé (301) et **en ce que** ladite identification (202) est codée dans un code-barre (302).

54. Système selon la revendication 53, **caractérisé en ce que** lesdits moyens (515) pour lire par machine comprennent un dispositif de lecture configuré pour lire optiquement ledit code-barre (302).

55. Système selon la revendication 53, **caractérisé en ce que** ledit code-barre (302) comprend une identification à authentification automatique.

56. Système selon la revendication 39, **caractérisé en ce que** ledit bon (201) comprend une carte de client régulier (301), respectivement, et **en ce que** ladite identification (302) est codée dans l'un d'un code-barre imprimé (302) et d'une bande magnétique.

57. Système selon la revendication 39, **caractérisé en ce que** ledit bon (201) comprend une carte à mémoire et **en ce que** ladite identification est codée dans ladite carte à mémoire.

58. Système selon la revendication 39, **caractérisé en ce que** ledit bon (201) comprend un numéro de téléphone de client et **en ce que** lesdits moyens (507) pour déterminer comprennent un clavier (602) qui permet l'entrée manuelle dudit numéro de téléphone de client.

59. Système selon la revendication 39, **caractérisé en ce que** ledit bon (201) comprend un dispositif d'identification radiofréquence et **en ce que** lesdits moyens (507) pour déterminer comprennent un dispositif d'interrogation de dispositif d'identification radiofréquence configuré pour lire ledit dispositif d'identification radiofréquence.

60. Système selon la revendication 39, **caractérisé en ce que** ledit bon (201) comprend un radiotéléphone et **en ce que** lesdits moyens (507) pour déterminer comprennent un émetteur-récepteur radio configuré pour lire une identification émise par ledit radiotéléphone.

61. Procédé selon la revendication 39, **caractérisé en ce que** ledit bon (201) comprend une identification basée sur Internet associée à un individu et **en ce que** lesdits moyens (507) pour déterminer déterminent ladite identification basée sur Internet.

62. Procédé selon la revendication 61, **caractérisé en ce que** ladite identification basée sur Internet comprend un Universal Resource Locator associé à l'individu.

63. Procédé selon la revendication 61, **caractérisé en ce que** ladite identification basée sur Internet comprend un compte e-mail associé à l'individu.

64. Procédé selon la revendication 61, **caractérisé en ce que** lesdits moyens (507) pour déterminer déterminent ladite identification basée sur Internet par l'utilisation par un individu d'une interface Internet associée.

65. Système selon la revendication 39, **caractérisé en ce que** ledit bon (201) comprend un numéro de compte de paiement et **en ce que** lesdits moyens (507) pour déterminer comprennent des moyens pour déterminer ledit numéro de compte de paiement.

66. Système selon la revendication 67, **caractérisé en ce que** ledit bon (201) comprend une carte de crédit et **en ce que** ladite identification est un numéro codé dans une bande magnétique sur ladite carte de crédit.

67. Système selon la revendication 65, **caractérisé en ce que** ledit bon (201) est un chèque et **en ce que** ladite identification est un numéro de compte chèque codé dans ledit chèque.

68. Système selon la revendication 39, **caractérisé en ce que** lesdits moyens (505) pour délivrer fonctionnent en réponse à l'utilisation d'un site Internet (508).

69. Système selon la revendication 68, **caractérisé en ce que** ledit site Internet (508) comprend un site World Wide Web.

70. Système selon la revendication 39, **caractérisé en ce que** lesdits moyens (505) pour délivrer fonctionnent en réponse à un achat au détail dans un magasin de détail par un client associé à ladite identification.

71. Système selon la revendication 70, **caractérisé en ce que** lesdits moyens (505) pour délivrer fonctionnent en réponse à un achat de crédit de service auxiliaire et **en ce que** ledit achat de crédit de service auxiliaire est diminué d'un montant promotionnel.

72. Système selon la revendication 71, **caractérisé en ce qu'**un parrain paie ledit montant promotionnel.

73. Système selon la revendication 72, **caractérisé en ce que** ledit bon (201) comprend des informations identifiant ledit parrain.

74. Système selon la revendication 72, comprenant en outre des moyens pour fournir un avis identifiant ledit parrain audit client.

75. Système selon la revendication 72, **caractérisé en ce que** ledit parrain comprend un fabricant de produits.

76. Système selon la revendication 72, **caractérisé en ce que** ledit parrain comprend une agence promotionnelle.
